# EUROPEAN PATENT SPECIFICATION

(11) **EP 1 438 170 B1**
(45) Date of publication and mention of the grant of the patent: **10.05.2006**
(21) Application number: 02801960.2
(22) Date of filing: 23.10.2002
(51) Int. Cl.: B29C 39/10, B29C 39/28, B29C 33/00, B32B 17/10

(54) **METHOD OF MANUFACTURING DECORATIVE PANELS**
VERFAHREN ZUM HERSTELLEN VON ZIERPLATTEN
PROCEDE DE PRODUCTION DE PANNEAUX DECORATIFS

(30) Priority: 23.10.2001 GB 0125392
(43) Date of publication of application: 21.07.2004
(73) Proprietor: Glasslam Europe Ltd., Sittingbourne, Kent ME10 2PG (GB)
(72) Inventor: HOWES, Stephen, Pompano Beach, FL 33062 (US); POPPLE, Philip, Sheerness, Kent ME12 3RP (GB)
(74) Representative: Fry, Alan Valentine
(86) International application number: PCT/GB2002/004784
(87) International publication number: WO 2003/035355

(56) References cited:
- EP-A- 0 441 391
- EP-A- 0 506 404
- EP-A- 0 911 147
- EP-A- 1 197 325
- DE-A- 10 016 088
- GB-A- 2 350 584
- US-A- 5 306 535
- US-A- 5 944 862
- US-A- 6 150 009

## Description

The present invention relates to decorative panels such as mirrors and windows and to methods of manufacturing such items.

Traditionally, decorative borders to mirrors and windows have been produced by grinding contours into suitably dimerisioned thick plate glass. Once contoured, the glass may be polished to produce the required finish. Mirrors and windows produced in this way are relatively expensive because of the time and skilled labour employed in their manufacture. Decorative mirrors and windows have also been produced as composites by adhering or otherwise securing a decorative border to one or more glass sheets. The main disadvantage of mirrors and windows manufactured in this manner is again the relatively high cost incurred during manufacture.

Recent advances have enabled decorative mirrors and windows to be mass produced less expensively than traditional methods. For example, mirrors and windows with decorative designs and surfaces have been injection moulded using clear thermoplastic materials. However, if various sizes, shapes and patterns of windows are desired, then this process becomes expensive due to the high cost of the tooling. Limited production runs are also cost prohibitive because a new die must be used for each of the different sizes and designs. Additionally, such mirrors and windows have not met with commercial success because they do not look and feel like glass.

UK Patent Application 2338682A discloses a method of producing a decorative window which overcomes many of the problems discussed above. In this process a glass master containing a decorative pattern is used to fabricate a mould with a complementary pattern. The mould is then oriented against a glass sheet having a release material facing the mould cavity. Liquid resin is cast into the cavity and cured. The decorative resin sheet can easily be removed from the mould and used to fabricate a window. The resin sheet can be cut to a desired size and shape. The cured decorative resin sheet is typically laminated to a glass sheet using a soft resin thus forming a decorative window. A second glass sheet may be attached to the decorative window in such a way as to house the resin sheet thus forming a window having an exterior consisting entirely of glass.

WO-A-02 070 284 discloses a method of producing a mirror or window having a decorative border wherein the resin border is cast into a cavity defined between an annealed glass sheet and a flexible mould which replicates the shape, dimensions and design of the required border. The mould has upstanding gaskets which are positioned alongside the margins of the border and co-operate with the glass sheet to confine cast resin to the border area defined between the gaskets.

US-A-5 944 862 and US-A-5 306 355 both dislose a method in accordance with the preamble of claim 1.

This invention provides an improved method of producing a mirror or window to those discussed in the preceding two paragraphs having a decorative border or decorative design over a part of its surface.

In accordance with claim 1 the invention provides a method of producing a window or mirror having a decorative pattern formed by casting liquid resin into a cavity defined between a toughened glass sheet and a flexible mould.

The flexible mould may be produced by pouring a mixture of silicone and a catalyst onto the surface of a substrate formed with a decorative design which is in the inverse of the decorative pattern to be bonded to the mirror surface and bordered by grooves which extend around the entire periphery of the decorative pattern, the mixture of silicone and catalyst being exposed to a vacuum before pouring to remove trapped air therefrom.

A release agent may be applied to the substrate surface before pouring of the silicone and catalyst mix.

A web may be placed on the surface of a first poured quantity of silicone and catalyst mix, the web being subsequently covered by a second pouring of the mix.

The method may comprise the additional steps of releasing the mould from the substrate, inverting the mould, clamping to the upper surface of the mould a toughened glass sheet to which the pattern is to be bonded with the now upstanding ridge formed by the grooves of the substrate compressed to define the gasket(s) to prevent the outflow of liquid from the mould interior, casting into the mould interior liquid resin, and after curing of the resin, removing the flexible mould from the glass surface.

Means may be provided in communication with the mould interior to release any trapped air therefrom.

The liquid resin may be cured by exposing the assembly of the glass sheet and the mould to infra-red heat.

In another aspect, the invention provides a window or mirror produced by a method as claimed in any one of the preceding seven paragraphs.

The invention will now be described, by way of example only, with reference to the accompanying diagrammatic drawings in which:
Figure 1 is a perspective view of a decorative mirror or window constructed in accordance with a preferred embodiment of the invention;
Figure 2 is a cross-sectional view of a master from which a decorative mirror or window in accordance with the invention is produced;
Figure 3 is a cross-sectional view of a mould from which replicas of the master shown in Figure 2 are produced;
Figure 4 is a section taken through apparatus by which a resin border can be produced from a mould as shown in Figure 3;
Figures 5 and 6 are side and front views of the apparatus illustrated in Figure 4 supported on a stand;
Figure 7 shows the profile of the resin border removed from the apparatus of Figure 4 which is to form the decorative border of the mirror or window; and
Figure 8 is a cross-sectional view of a mirror or window produced in accordance with the invention.

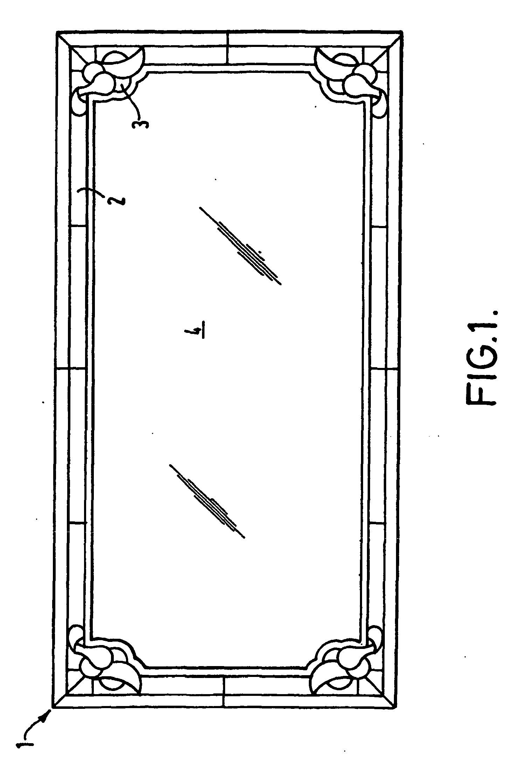

The decorative mirror or window illustrated in Figure 1 includes a glass sheet 1 and a laminated resin border 2. The resin border 2 is produced from a casting resin and is formed as a single piece with a decorative design 3. The central area 4 of the mirror or window is left plain. The resin border could, however, extend partially across the area 4 to produce a plurality of areas each bordered by a resin margin. The resin border 2 may be transparent or, alternatively, may be tinted or coloured to provide a pleasing visual effect.

In an unillustrated alternative embodiment, the decorative design is positioned generally centrally of the mirror or window. In a further alternative embodiment the mirror or window has both a decorative border and a decorative design within this border.

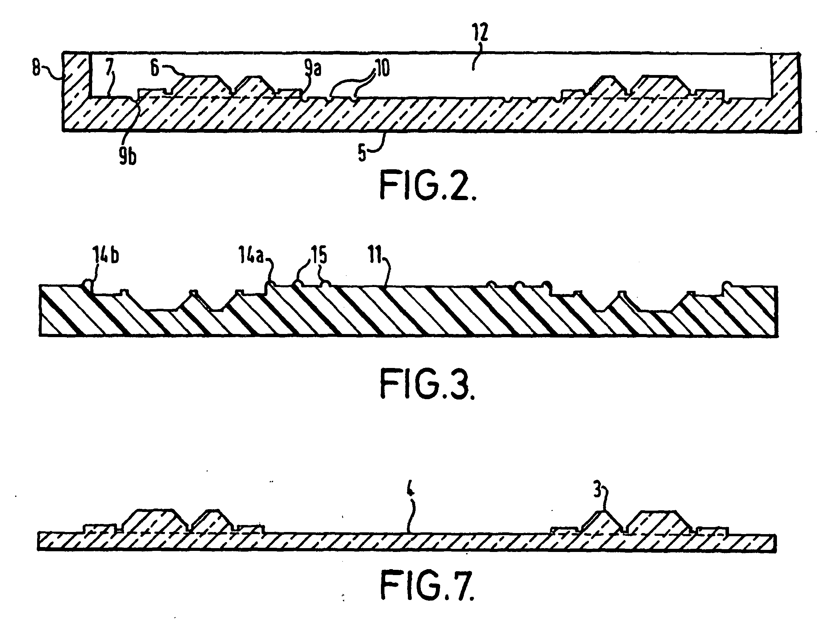

Figure 2 illustrates a master substrate 5 used to produce a flexible mould having a generally rubber-like consistency from which the resin border 2 is produced. The master substrate may be produced from cast acrylic or glass; other suitable materials may however be used. The surface of the master substrate 5 is formed with a decorative design 6 which corresponds to the decorative design 3 shown in Figure 1 or a generally centrally positioned decorative design as discussed above. Preferably, the required design is produced by use of a suitably programmed computerised numerically controlled (CNC) machine tool. The use of a CNC machine tool enables a wide variety of different designs to be produced both accurately and relatively speedily.

A framework of plastics or like material is applied to the edge of the master substrate 5 to provide increased thickness to contain the mould during its production. Both the spaces 7 and the applied framework 8 extend around the entire periphery of the master substrate 5. The depth of the spaces 7 dictates the resultant height of the resin border 2 and are sized accordingly.

The master substrate is also formed with shallow grooves 9a, 9b which extend around the inner and outer margins of the decorative design 6 of the resin border. These grooves extend around the entire periphery of the design 6. Additional grooves 10 are provided, these being spaced inwardly from the groove 9a.

To prepare the master substrate for producing a mould, any untextured portions of the substrate surface are polished to a high gloss and waxed using a wax product such as a paste. One or more surfaces of the master substrate may be textured to diffuse surface inhibitions following production of the mirror or window. Textures may be introduced by use of, for example, self-adhesive embossed sheets or surface treatments such as acid wash and plasters. The exposed surface of the master substrate is finally polished and coated with a release agent.

To produce the flexible mould 11 illustrated in Figure 3, the cavity 12 of the master substrate 5 defined between the framework 8 is filled with a mixture which typically comprises a silicone and a catalyst blended with a pre-mixed substance consisting of a light oil additive mixed with a fast curing tin catalyst. The use of a catalyst in the mixture tends to introduce large amounts of air during the curing process. Consequently small indentations may be formed in the surface of the finished mould. To overcome this problem, the mixture is exposed to a vacuum of around 25Hg for a period of time (typically five minutes) before pouring. Any trapped air is thereby removed from the mixture. Use of the release agent ensures that silicone from the mixture is not left on the surface of the master substrate when the mould is removed. Polishing of the master substrate surface ensures a clean and gloss-like finish to this mould surface.

The mixture is poured from a container to an intermediate level within the cavity 12 of the master substrate and a web or mesh is placed on the mixture surface to provide enhanced strength to the mould once it has cured. The web inhibits stretching of the mould when in use. Additional mixture is then poured over the web or mesh to the height of the peripheral framework 8 forming an upper surface. The mould is placed with its flat surface against a waxed sheet of toughened or tempered glass. This is to ensure that the mould releases without sticking from the glass sheet during the production process. The glass sheet is merely a support which provides rigidity for the mould.

A series of holes are drilled into the mould at key points to release any air which may become trapped in the mould during resin casting. These holes are sufficiently narrow to be self-filling and are designed to enable a needle of a syringe to pass through.

The profile of the produced mould 11 is shown in Figure 3. This profile includes a mirror image of the required decorative pattern 6 of the border 2 and protruding ridges 14a, 14b, 15 produced by the grooves 9a, 9b and 10 respectively. These ridges act as compressible gaskets to confine subsequently cast resin to the area of the pattern 6. The resin is therefore prevented by these gaskets from flowing onto what is to be the reflective surface of a mirror or the plain surfaces of a window.

For embodiments ion which the decorative design is to be applied to a central area of the mirror or window, the ridges 14, 15 extend around and in close proximity to the margins of the mould. Typically, these ridges are spaced between 0.5 and 10.0mm from the ridges (preferably less than 5mm) and are typically no wider than between 2.5 and 7.5mm.

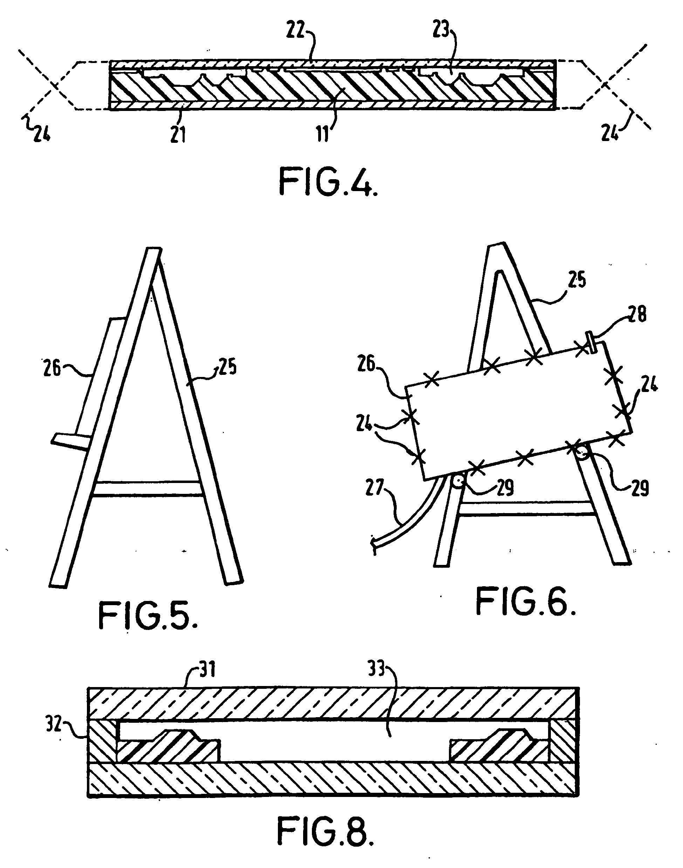

Figure 4 illustrates the use of the mould 11 to produce the resin border 2. Once removed from the master substrate 5, the mould is inverted and its flat surface placed against a support member 21 leaving the decorative side of the mould 11 facing upwards.

A sheet of annealed glass 22 is placed on top of the mould to define a frame-shaped cavity 23 which is subsequently filled with a cast liquid resin which cures to a high degree of hardness to ultimately produce the resin border 2. The surface of the glass sheet 22 is provided with a releasable adherent film in the form of a stencilled mask, the open portion of the mask replicating the shape and dimensions of the mould to be placed on the glass sheet 22.

Typically the mask is produced from a plastics material and includes a backing sheet which is peeled off to reveal the adherent. Thus, the area of the glass sheet on which the decorative design is not to appear are fully protected from a cast resin leakage. The annealed glass, mould and support member are then secured together with releasable spring loaded clamps 24. The clamped assembly 26 of the support 21, mould 11 and glass sheet 22 are supported on a stand 25 as shown in Figures 5 and 6. The assembly may be positioned generally vertically. An angle of between 45° and 90° is preferred.

A thin tube 27 connected to a pump is inserted between the mould and the annealed glass sheet 22 to fill the cavity with liquid resin. To avoid distortion of the mould caused by pressure applied to it by the clamps, a small opening is made through the mould wall through which the tube 27 is inserted.

A breather tube 28 is inserted into the cavity through a small opening formed in the mould at a position diagonally opposite to the opening through which resin is admitted to the cavity through the tube 27. During the filling process, the clamped assembly 26 is supported on stops 29 whereby the assembly is inclined at an angle of between 179° and 100°, with the breather tube 28 at the upper corner of the mould. This ensures that any trapped air rises and is expelled through the breather tube 28 during the casting process.

To prevent pin pricks in the surface of the cast resin caused by a micro layer of resin not curing because of incompatibility between the adjoining surfaces of the mould and the resin, heat is applied to the assembly during the casting and curing processes.

Preferably, the resin is a clear casting resin which consists primarily of a clear base resin blended with a stabilizer. The stabilizer is necessary to prevent the hardened resin sheet from turning yellow over time. In addition, the stabilizer beneficially inhibits the transmission of ultraviolet light.

Once the cavity is filled completely with liquid resin, the assembly of the spring clamps, annealed glass sheet, mould and support member is levelled for curing.

The sealed liquid resin is cured using a heating process either by exposing the assembly to infrared heat or by using an oven process. Infrared curing typically takes between seven and ten minutes to complete. Once cured, the spring clamps and the mould are removed to reveal the annealed glass sheet to which is bonded the resin border having the required decorative pattern corresponding to that of master substrate. The masking film is then removed and the undersurface of the annealed glass sheet is then silvered if required.. Additional mirrors or windows may thereafter be formed using the mould and process described above.

During the casting process, the gaskets 14, 15 are firmly compressed by the weight of the sheet of annealed glass and the clamping of the perimeter and inner gaskets thereby confining the flow of resin to the area of the border creating cavity. The profile of the annealed glass sheet and decorative border is shown in Figure 7.

As will be seen from Figure 8, the annealed sheet of glass with the bonded decorative border is covered by a sheet of anti-reflective glass 31. The sheet 31 is supported on spacers 32 to define a sealed air space 33. The anti-reflective surface of the sheet 31 may be sputter, cathodic or spray coated to produce a reflective index to 0.5 % or below. Suitable spacers included those marketed by Edgetech under the name SUPER-SPACER (™).

It will be appreciated that the foregoing is merely exemplary of decorative mirrors and methods of producing such mirrors in accordance with the invention and that modifications can readily be made thereto without departing from the true scope of the invention as set out in the appended claims.

## Claims

1. A method of producing a window or mirror having a decorative pattern (3) formed by casting liquid resin into a cavity defined between a toughened glass sheet (1) and a flexible mould (11) shaped and dimensioned to replicate the shape and dimensions of the required pattern, the mould having an upstanding protruding ridge (14a, 14b, 15) positioned alongside each border of the flexible mould (11) which, during casting of the liquid resin, cooperate with the glass sheet (1) to confine the cast resin to the cavity of the mould, the method being **characterised by** including the step of applying to the entire area of the glass sheet (1) not covered by the flexible mould a releasable adherent film which is removed from the glass sheet after casting of the liquid resin together with any resin leaked from the mould during casting.

2. A method as claimed in claim 1 wherein a web is placed on the surface of a first cast quantity of liquid resin, the web being subsequently covered by a second quantity of cast resin.

3. A method as claimed in claim 1 or 2 wherein the liquid resin is cured by exposing the assembly of the glass sheet and the mould to infra-red heat.

## Patentansprüche

1. Verfahren zur Erzeugung eines Fensters oder eines Spiegels mit einem Ziermuster (3), das durch Gießen eines flüssigen Kunstharzes in einen Hohlraum erzeugt wird, welcher zwischen einer vergüteten Glasscheibe (1) und einer flexiblen Form (11) definiert ist, wobei der Hohlraum so gestaltet und dimensioniert ist, dass er die Form und Dimension des gewünschten Musters repliziert, und wobei die Form eine aufrechtstehende, vorstehende Rippe (14a, 14b, 15) aufweist, die entlang eines jeden Rahmens der flexiblen Form (11) positioniert ist, die während des Eingießens des flüssigen Kunstharzes zusammenwirken, um das vergossene Kunstharz innerhalb des Hohlraums der Form einzuschließen, **dadurch gekennzeichnet, dass** das Verfahren den Schritt aufweist, auf dem gesamten Bereich der Glasscheibe (1), der nicht durch die flexible Form bedeckt ist, einen lösbaren Kleberfilm aufzubringen, der nach dem Vergießen des flüssigen Kunstharzes, zusammen mit allen Kunstharzresten, die während des Vergießens im Leckstrom aus der Form ausgetreten sind, von der Glasscheibe entfernt wird.

2. Verfahren nach Anspruch 1, bei welchem ein Stoff über die Oberfläche einer ersten Gießmenge des flüssigen Kunstharzes aufgebracht wird, wobei der Stoff danach mit einer zweiten Menge eines Gießkunstharzes bedeckt wird.

3. Verfahren nach den Ansprüchen 1 oder 2, bei welchem das flüssige Kunstharz ausgehärtet wird, indem der Aufbau von Glasscheibe und Form einer Infrarot-Erhitzung ausgesetzt wird.

## Revendications

1. Un procédé de fabrication d'une fenêtre ou d'un miroir ayant un motif décoratif (3) formé par moulage avec de la résine liquide dans une cavité définie entre une feuille (1) de verre trempé et un moule flexible (11) ayant la forme et dimensions pour répéter la forme et les dimensions du motif requis, le moule ayant des arêtes en saillie dirigées vers le haut (14a, 14b, 15) positionnées le long de chaque limite du moule flexible (11) qui, pendant la coulée de la résine liquide, coopèrent pour confiner la résine coulée dans la cavité du moule, le procédé étant **caractérisé en ce qu'**il comprend l'étape d'appliquer sur la totalité de la zone de la feuille de verre (1) non recouverte par le moule flexible d'un film adhérent amovible qui est enlevé de la feuille de verre après la coulée de la résine liquide ensemble avec toute résine s'échappant du moule pendant le moulage.

2. Procédé selon la revendication 1 au cours duquel on dispose une toile sur la surface d'une première quantité coulée de résine liquide, la toile étant ensuite recouverte d'une seconde quantité de résine coulée.

3. Procédé selon la revendication 1 ou 2 au cours duquel on durcit la résine liquide par exposition de l'assemblage de la feuille de verre et du moule à un chauffage infrarouge.
